# EUROPÄISCHE PATENTSCHRIFT

(11) **EP 2 612 275 B1**
(45) Veröffentlichungstag und Bekanntmachung des Hinweises auf die Patenterteilung: **28.09.2016**
(21) Anmeldenummer: 11735886.1
(22) Anmeldetag: 27.07.2011
(51) Int. Cl.: G06K 19/077

(54) **SIM-KARTE UND VERFAHREN ZUR HERSTELLUNG DERSELBEN**
SIM CARD AND METHOD FOR PRODUCING SAME
CARTE SIM ET PROCÉDÉ POUR SA FABRICATION

(30) Priorität: 31.08.2010 CH 14062010
(43) Veröffentlichungstag der Anmeldung: 10.07.2013
(73) Patentinhaber: Swisscom AG, 3050 Bern (CH)
(72) Erfinder: JENNI, Peter, CH-3084 Wabern (CH)
(74) Vertreter: P&TS SA (AG, Ltd.)
(86) Internationale Anmeldenummer: PCT/EP2011/062928
(87) Internationale Veröffentlichungsnummer: WO 2012/028393

(56) Entgegenhaltungen:
- EP-A1- 1 626 365
- EP-A1- 1 626 366
- JP-A- 2006 309 629

## Beschreibung

### Technisches Gebiet

Die Erfindung bezieht sich auf eine SIM-Karte im Plug-in Format gemäss dem unabhängigen Sachanspruch und auf ein Verfahren zur Herstellung derselben.

### Stand der Technik

SIM-Karten (Subscriber Identity Module) werden unter anderem in GSM- und UMTS Mobilfunknetzwerken zur Identifizierung der Mobilteilnehmer verwendet. Dabei wurden unterschiedliche Kartenformate definiert. Ältere Mobilgeräte oder Geräte, bei denen die SIM-Karte häufig gewechselt werden soll, verwenden meistens SIM-Karten im Kreditkarten-Format, das sogenannte ID-1 Format. Bei modernen und kleinen Mobilgeräten haben sich sogenannte Plug-In SIM-Karten im ID-000 Format durchgesetzt. Noch kleiner sind die sogenannten Mini-UICC SIM-Karten, die insbesondere bei den modernen miniaturisierten Mobilgeräten immer häufiger eingesetzt werden. Diese SIM-Karten Formate werden unter anderem in der GSM Spezifikation TS102 221 v9.1.0 spezifiziert.

EP521778 beschreibt eine derartige SIM-Karte im Plug-in Format, die in einer grösseren SIM-Karte im Kreditkartenformat angeordnet ist. Die Plug-in Karte wird von gestanzten Freischnitt umgeben, und ist nur noch durch einige Verbindungsstellen mit dem Rest der grösseren Karte verbunden. Durch Drücken auf die Plug-In Karte kann diese von der grösseren Karte gelöst und somit in einem Mobilgerät eingesetzt werden, das nur SIM-Karten im Plug-in Format akzeptiert.

WO0043950 beschreibt einen anderen Datenträger mit einer ausbrechbaren Chipkarte im Plug-In Format. Innerhalb der Plug-In Karte ist eine weitere Sollbruchlinie zur weiteren Verkleinerung der SIM-Karte angeordnet. Mit dieser Lösung können Mobilfunknetzbetreiber anpassbare SIM-Karten an alle ihre Mobilteilnehmer verteilen, ohne sich um den Typ des verwendeten Mobilgeräts zu kümmern; der Mobilteilnehmer kann selbst die Karte durch gezielte Trennung von Verbindungsstegen an die benötigte Grösse anpassen.

Eine ähnliche Lösung wird auch in WO2006069965 beschrieben, das verschiedene Vorstanzvorgänge beschreibt.

Damit die kleinere Karte sauber von der grösseren Karte getrennt wird, muss grosse Sorgfalt bei der Herstellung der Verbindungsstege ausgeübt werden. Es muss insbesondere sichergestellt werden, dass diese Stege sauber zerrissen bzw. getrennt werden, ohne dass dabei ungewünschte Grate oder unsaubere Abrissränder zurückbleiben, die das Einstecken des Mobilgeräts verhindern könnten oder gar die elektrischen Kontakte innerhalb des Mobilgeräts schaden könnten. Es ist ebenso wichtig, dass die Trennung genau entlang der gewünschten Trennungslinie erfolgt, damit die ausgetrennte Karte im Plug-In oder Mini-Format genau die standardisierte Grösse und Format aufweist. Dabei muss auch darauf geachtet werden, dass diese Verbindungsstege nur dann gebrochen werden, wenn dies auch gewünscht wird, und nicht unbeabsichtigt, etwa wenn die Karte gebogen oder anders manipuliert wird.

Diese technischen Schwierigkeiten bei der Herstellung der trennbaren Verbindungsstege wurden durch unterschiedliche Lösungen in mehreren Patentschriften weitgehend gelöst. FR2773900, WO0017814, WO0016257, FR2806661, FR2819081 oder WO0115077 widmen sich alle mindestens zum Teil dieser Problematik. Häufig wird zum Beispiel die Sollbruchlinie durch die Verbindungsstelle einseitig oder zweiseitig durch eine eingeritzte Linie markiert, die das Risiko der Einkerbung deutlich reduziert.

EP1626365 und EP1626366 betreffen eine SIM-Karte, die eine Mini-SIM-Karte umfasst, welche vor geritzten Linien und Aussparungen umgeben ist. Die SIM-Karte kann selber von einem Freischnitt umgeben sein.

EP749095 betrifft eine Standartkarte mit eingestanzter SIM-Karte, die über Verbindungsbereiche mit dem Standardkartenkörper verbunden sind. Die Verbindungsbereiche sind weitgehend oder vollständig durchtrennt und werden von kleinen Schlitzen unterbrochen. Die Schlitze beugen Spannungen innerhalb der SIM-Karte vor und die SIM-Karte ist einfach auf dem Stadardkörper heraustrennbar. Dieses Dokument offenbart jedoch keine SIM-Karte im Plug-in Format mit einer integrierten Mini SIM-Karte im Mini-Format im Sinne dieser Anmeldung.

Dieses Problem der unsauberen Trennung von Verbindungsstegen wurde inzwischen so gut gelöst, dass es in der Praxis nicht oder kaum noch vorkommt. Auch ein ungeschickter Benutzer kann zuverlässig die SIM-Karte im Plug-in Format aus dem Datenträger trennen, und danach noch die Karte im Mini-Format sauber austrennen, ohne dass dabei gefährliche Grate entstehen.

### Darstellung der Erfindung

Es ist somit ein Ziel der Erfindung, das Problem von Graten bei gestanzten, vom Benutzer austrennbaren SIM-Karten im Mini-Format, zu lösen.

Es ist besonders das Ziel der Erfindung, dass eine SIM-Karte im Plug-in Format mit einer integrierten SIM-Karte im Mini-Format im Slot (SIM-Kartenleser) eines Mobilgeräts genutzt werden kann, ohne dass die Kontakte vom Mobilgerät dadurch beschädigt werden. Das Ziel besteht ebenso darin, dass die SIM-Karte im Mini-Format sauber aus dem Plug-in ausgebrochen werden kann.

Erfindungsgemäss wird dieses Ziel mit einer SIM-Karte mit den Merkmalen des unabhängigen Vorrichtungsanspruchs 1 und durch ein Verfahren nach Anspruch 12 erreicht.

Weitere vorteilhafte Ausführungsformen sind in den Unteransprüchen angegeben.

### Kurze Beschreibung der Figuren

Die Erfindung wird anhand der beigefügten Figuren näher erläutert, wobei zeigen
- **Fig. 1**: eine Ansicht einer SIM-Karte gemäss einer ersten Ausführungsform der Erfindung; und
- **Fig. 2**: eine Ansicht einer SIM-Karte gemäss einer zweiten Ausführungsform der Erfindung.

### Wege zur Ausführung der Erfindung

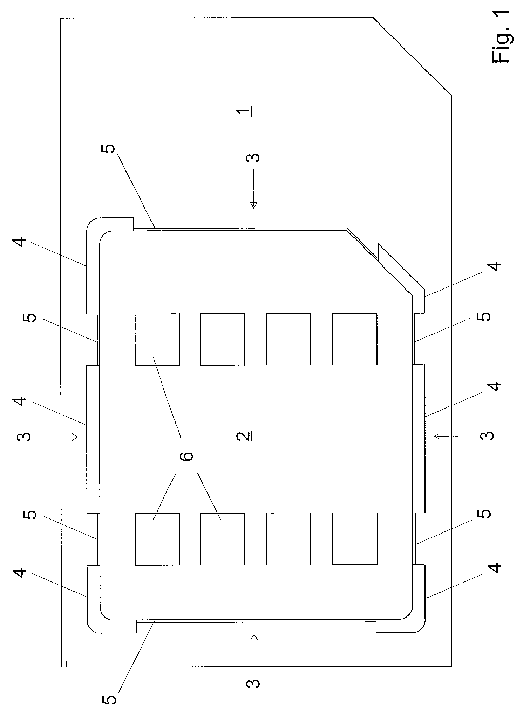

Die erfindungsgemässe SIM-Karte 1 gemäss einer ersten Ausführungsform der Erfindung ist in der Figur 1 dargestellt. Gezeigt wird eine SIM-Karte im Plug-in Format 1 mit einer integrierten SIM-Karte 2 im Mini-Format, die elektrische Kontakte 6 zur elektrischen Verbindung mit einem Mobilgerät aufweist. Es handelt sich bei den Kontakten 6 um den Bereich, wo die Kontakte des Mobilgeräts auf die SIM-Karte auftreffen können. Die SIM-Karte im Plug-in Format 1 ist mit der integrierten SIM-Karte im Mini-Format 2 durch gestanzte Freischnitte 4 getrennt und auf beiden Seiten der SIM-Karte mit eingeritzten Linien als Sollbruchstellen 5 verbunden. Die SIM-Karte im Mini-Format 2 hat vier seitliche Kanten 3, an denen die Freischnitte 4 und beidseitig eingeritzten Linien 5 vorhanden sind. Der Benutzer kann je nach Bedarf entweder die SIM-Karte im Plug-in Format 1 verwenden oder die SIM-Karte im Mini-Format 2 durch die vorgegebenen Sollbruchstellen 5 herausbrechen.

In der Praxis wird heutzutage die SIM-Karte im Plug-In-Format 1 mit integrierter SIM-Karte 2 verwendet. Die SIM-Karte wird entweder seitlich in das Mobilgerät eingeschoben oder von oben an in das Mobilgerät gedrückt. Beim Einschieben wird eine Einschubrichtung senkrecht zu den Kanten 3 verwendet.

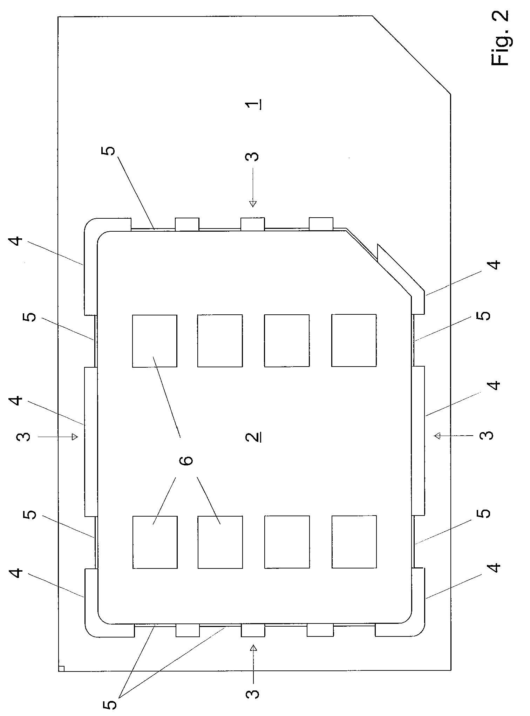

Die erfindungsgemässe SIM-Karte 1 gemäss einer zweiten Ausführungsform der Erfindung ist in der Figur 2 dargestellt. Die elektrischen Kontakte der Mini SIM-Karte 2 sind in dieser Ausführungsform in Bezug auf die einseitig oder vorzugsweise beidseitig eingeritzte Linien 5 ausgerichtet. Dabei ist zu beachten, dass diese Ausrichtung in der Regel in Einschubrichtung geschieht. Die eingeritzte Linie 5 ist in dieser Variante kürzer und an den Abstand zwischen jedem einzelnen Kontakt durch einen kleinen Freischnitt 4 ersetzt, damit die Mini-SIM-Karte 2 leichter getrennt werden kann.

Gemäss der vorliegenden Erfindung ist der gestanzte Freischnitt 4 der Mini SIM-Karte 2 herum an den Stellen, an denen die elektrischen Kontakte 6 des Mobilgeräts über die SIM-Karte gleiten können, ausgespart. Durch die vorliegende Erfindung wird erreicht, dass beim Einschieben der SIM-Karte in den Slot des Mobilgerätes die Kontakte des Mobilgerät nicht über die Freischnitte 4 gleiten können und die elektrischen Kontakte des Mobilgeräts nicht beschädigt oder gar zerreissen werden.

Entsprechend der Ausführungsform der Figur 1 werden lediglich vier Ecken mit einem Freischnitt 4 versehen. Zwischen den Freischnitten 4 sind einseitig oder vorzugsweise beidseitig eingeritzte Linien 5 vorhanden. Entsprechend der Ausführungsvariante der Fig. 1 können einseitig oder vorzugsweise beidseitig eingeritzte Linien 5 an seitlich gegenüberliegenden Kanten 3 der Mini SIM-Karte 2 vorhanden sein. Die Projektion des Kontaktfeldes über die vier Kanten ist somit frei von eingestanzten Freischnitten 4, so dass die SIM-Karte im Mini-Format senkrecht zu einer der Kanten in den Slot eines Mobilgeräts eingeschoben werden kann, ohne dass dabei Grate an einen Freischnitt 4 über die elektrische Kontakte des Mobilgeräts fahren können.

Es ist aber nicht zwingend notwendig, dass die Freischnitte 4 exakt mit den elektrischen Kontakten 6 gefluchtet sind. Vielmehr können die Freischnitte 4 auch ein bisschen grösser sein, solange die elektrischen Kontakte 6 des Mobilgeräts nicht durch einen möglichen Grat beschädigt werden. In der Regel sind die elektrischen Kontakte 6 des Mobilgeräts dabei kleiner als die grösseren elektrischen Kontakte der SIM-Karte.

In den beiden Varianten wird an jede Kante 3 der Mini SIM-Karte 2 eine eingeritzte Linie 5 nur entlang dem geraden Abschnitt gegenüber der Kontakte 6 vorgesehen, wobei diese Linie 3 in der Variante der Figur 1 nicht unterbrochen ist und in der Variante der Figur 2 unterbrochen ist. Die Trennlinie um die Mini SIM-Karte 2 kann aber auch zusätzliche Abschnitte enthalten, die durch eine eingeritzte Linie 3 statt durch einen Freischnitt 4 markiert sind, einschliesslich Abschnitte, die nicht benachbart an dem Kontaktfeld 6 vorgesehen sind, zum Beispiel eingeritzte Linie 5 um die Ecken oder in der Nähe der Ecken der Trennlinie zwischen der Mini SIM-Karte 2 und der Plug-In SIM Karte 1.

Die SIM-Karte im Plug-in Format kann selbst Teil einer grösseren, nicht dargestellten SIM-Karte im Kreditkarten Format als Datenträger sein (nicht dargestellt), und von dieser grösseren Karte durch einen Freischnitt mit Verbindungsstellen umgeben sein, wobei diese Verbindungsstellen ebenfalls vom Benutzer getrennt werden können.

Die Erfindung bezieht sich auch auf ein Verfahren zur Herstellung einer solchen SIM-Karte 1 mit den entsprechenden Verfahrensschritten. Dabei wird zuerst eine Mini SIM-Karte 2 innerhalb einer Plug-In Karte hergestellt, wobei die Mini-SIM-Karte von einem gestanzten Freischnitt 4 umgeben ist, und nur noch durch einige Sollbruchstellen 5 mit dem Rest der Plug-in SIM-Karte 1 verbunden ist, wobei der Freischnitt 4 und die Verbindungsstellen 5 derart angeordnet sind, dass die Mini SIM-Karte 2 durch Drücken vom restlichen Plug-in Karte 1 lösbar ist. Dabei wird erfinderisch der Freischnitt 4 an den Kanten 3 um die Mini SIM-Karte 2 herum ausgestanzt, der an den Stellen ausgespart ist, an denen die elektrischen Kontakte des Mobilgeräts darüber gleiten können, wenn die SIM-Karte in das Mobilgerät eingeschoben wird. Zusätzlich wird das Material zwischen dem Freischnitt 4 herum auf beiden Seiten der SIM-Karte eingeritzt.

Die vorliegende Erfindung bezieht sich auch auf ein Mobilgerät, in die eine erfindungsgemässe SIM-Karte eingeschoben ist.

### Bezugszeichenliste

- 1: SIM-Karte im Plug-in Format
- 2: SIM-Karte im Mini-Format
- 3: Kante
- 4: Gestanzte Freischnitte
- 5: Beidseitig eingeritzte Linien / Sollbruchstelle
- 6: Elektrische Kontakte der SIM-Karte

## Patentansprüche

1. SIM-Karte im Plug-in Format (1) mit einer integrierten Mini SIM-Karte im Mini-Format (2), die elektrische Kontakte (6) zur elektrischen Verbindung mit elektrischen Kontakten eines Mobilgeräts aufweist,
wobei die Mini SIM-Karte (2) von mehreren gestanzten Freischnitten (4) umgeben ist, und noch durch einige Verbindungsstellen mit dem Rest der Plug-in SIM-Karte (1) verbunden ist, wobei die Freischnitte (4) und die Verbindungsstellen derart angeordnet sind, dass die Mini SIM-Karte (2) durch Drücken vom restlichen Plug-in SIM-Karte (1) lösbar ist und zwischen den Freischnitten (4) eingeritzte Linien (5) vorhanden sind,
**dadurch gekennzeichnet, dass**
die Projektion der elektrischen Kontakte (6) über vier Kanten der Mini SIM-Karte (2) frei von den gestanzten Freischnitten (4) ist, so dass die Mini SIM Karte (2) senkrecht zu einer der vier Kanten in einen Slot des Mobilgeräts eingeschoben werden kann, ohne dass dabei Grate an einem Freischnitt (4) über die elektrischen Kontakte des Mobilgeräts fahren können.

2. SIM-Karte (1) gemäss dem Anspruch 1, **dadurch gekennzeichnet, dass** die elektrischen Kontakte (6) der Mini SIM-Karte (2) zu den eingeritzten Linien (5) ausgerichtet sind.

3. SIM-Karte (1) gemäss einem der Ansprüche 1 bis 2, **dadurch gekennzeichnet, dass** die elektrische Kontakte (6) der Mini SIM-Karte (2) zu den eingeritzten Linien (5) in Einschubrichtung der Mini SIM-Karte (2) in das Mobilgerät ausgerichtet sind.

4. SIM-Karte (1) gemäss einem der Ansprüche 1 bis 3, **dadurch gekennzeichnet, dass** die eingeritzte Linien (5) an seitlich gegenüberliegenden Kanten (3) der Mini SIM-Karte (2) vorhanden sind.

5. SIM-Karte (1) gemäss einem der Ansprüche 1 bis 4, **dadurch gekennzeichnet, dass** eingeritzte Linien (5) an seitlich gegenüberliegenden Kanten (3) der Mini SIM-Karte (2) vorhanden sind, die durch die gestanzten Freischnitte (4) unterbrochen sind.

6. SIM-Karte (1) gemäss einem der Ansprüche 1 bis 5, **dadurch gekennzeichnet, dass** an jeder der vier Kanten (3) eine eingeritzte Linie (5) vorhanden ist,
und dass diese eingeritzten Linien miteinander durch die gestanzten Freischnitte (4) getrennt sind.

7. SIM-Karte (1) gemäss Anspruch 6, **dadurch gekennzeichnet, dass** die eingeritzte Linie (5) nur entlang der geraden Abschnitte der vier Kanten (3) vorgesehen ist.

8. SIM-Karte (1) gemäss einem der Ansprüche 6 oder 7, **dadurch gekennzeichnet, dass** die eingeritzte Linie (5) an jeder der vier Kanten (3) ununterbrochen ist.

9. SIM-Karte (1) gemäss einem der Ansprüche 6 oder 7, **dadurch gekennzeichnet, dass** die eingeritzte Linie (5) an jeder der vier Kanten (3) aus mehreren geraden Segmenten eines geraden Abschnitts gegenüber den Kontakten (6) besteht.

10. SIM-Karte (1) gemäss einem der Ansprüche 1 bis 9, **dadurch gekennzeichnet, dass** die eingeritzten Linien (5) einseitig oder beidseitig eingeritzt sind.

11. SIM-Karte (1) gemäss einem der Ansprüche 1 bis 10, **dadurch gekennzeichnet, dass** die Mini SIM-Karte (2) eine fünfte Kante aufweist, und die Anordnung der vier Kanten (3) und der fünften Kante der GSM Spezifikation TS 102 221 v.9.1.0 entsprechen.

12. Verfahren zur Herstellung einer SIM-Karte im Plug-in Format (1) mit einer integrierten SIM-Karte im Mini-Format (2), die elektrische Kontakte (6) zur elektrischen Verbindung mit elektrischen Kontakten eines Mobilgeräts aufweist, umfassend folgende Verfahrenschritte:
Herstellen einer SIM-Karte im Plug-in Format (1) mit einer integrierten Mini SIM-Karte (2), die von mehreren gestanzten Freischnitten (4) umgeben ist, und noch durch einige Verbindungsstellen mit dem Rest der Plug-in SIM-Karte (1) verbunden ist, wobei die Freischnitte (4) und die Verbindungsstellen derart angeordnet sind, dass die Mini SIM-Karte (2) durch Drücken vom restlichen Plug-in Karte (1) lösbar ist, und
Einritzten (5) des Materials zwischen den Freischnitten (4),
**dadurch gekennzeichnet, dass**
die Projektion der elektrischen Kontakte (6) über vier Kanten der Mini SIM-Karte (2) frei von den gestanzten Freischnitten (4) ist, so dass die Mini SIM Karte (2) senkrecht zu einer der vier Kanten in einen Slot des Mobilgeräts eingeschoben werden kann, ohne dass dabei Grate an einem Freischnitt (4) über die elektrischen Kontakte des Mobilgeräts fahren können.

13. Verfahren gemäss Anspruch 12, **dadurch gekennzeichnet, dass** die SIM-Karte im Plug-in Format (1) aus einem Datenträger herausgetrennt wird.

14. Mobilgerät, in das eine SIM-Karte gemäss einem der Ansprüche 1 bis 11 eingeschoben ist.

## Claims

1. SIM card in plug-in format (1) with an integrated mini-SIM card in mini format (2) which comprises electrical contacts (6) for an electrical connection to electrical contacts on a mobile device,
wherein the mini SIM card (2) is surrounded by several punched cutouts (4), and is still connected to the rest of the plug-in SIM card (1) by some connecting points (5), wherein the cutouts (4) and the connecting points (5) are arranged in such a way that the mini SIM card (2) can be detached from the rest of the plug-in card (1) by pressing and engraved lines are present between the cutouts (4),
**characterized in that**
the projection of the electrical contacts (6) over the four edges of the mini SIM card (2) are free of punched cutouts (4) so that the mini SIM card (2) can be inserted rectangular to one of the four edges in a slot of the mobile device without burrs on a cutout (4) being able to drive over the electric contacts of the mobile device.

2. SIM card (1) according to claim 1, **characterized in that** the electrical contacts (6) of the mini SIM card (2) are aligned in relation to the engraved lines (5).

3. SIM card (1) according to one of claims 1 to 2, **characterized in that** the electrical contacts (6) of the mini SIM card (2) is aligned in relation to the engraved lines (5) in the direction of insertion of the mini SIM card (2) into the mobile device.

4. SIM card (1) according to one of the claims 1 to 3, **characterized in that** the engraved lines (5) are provided on laterally opposite edges (3) of the mini SIM card (2).

5. SIM card (1) according to one of the claims 1 to 4, **characterized in that** the engraved lines (5) on laterally opposite edges (3) of the mini SIM card (2) are provided that are interrupted by the punched cutouts (4).

6. SIM card (1) according to one of the claims 1 to 5, **characterized in that** at each of the four edges (3) an engraved line (5) is provided,
and that these engraved lines are separated from one another by the punched cutouts (4).

7. SIM card (1) according to claim 6, **characterized in that** the engraved line (5) is provided only along the straight section of the four edges (3).

8. SIM card (1) according to one of the claims 6 or 7, **characterized in that** the engraved line (5) at each of the four edges (3) is unbroken.

9. SIM card (1) according to one of the claims 6 or 7, **characterized in that** the engraved line (5) at each of the four edges consists of several straight segments of a straight section opposite the contacts (6).

10. SIM card (1) according to one of the claims 1 to 9, **characterized in that** said engraved lines (5) are engraved on one side or on both sides.

11. SIM card (1) according to one of the claims 1 to 10, **characterized in that** the mini SIM card (2) comprises a fifth edge, and the arrangement of the four edges (3) and of the fifth edge corresponds to the GSM specification TS 102 221 v.9.1.0.

12. Method for producing a SIM card in plug-in format (1) with an integrated SIM card in mini format (2), which has electrical contacts (6) for an electrical connection to electrical contacts on a mobile device, comprising the following method steps:
manufacturing a SIM card in plug-in format (1) with an integrated mini SIM card (2) that is surrounded by several punched cutouts (4), and is still connected to the rest of the plug-in SIM card (1) by some connecting points (5), wherein the cutouts (4) and the connecting points (5) are arranged in such a way that the mini SIM card (2) can be detached from the rest of the plug-in card (1) by pressing,
engraving (5) the material between the cutouts (4)
**characterized in that**
the projection of the electrical contacts (6) over the four edges of the mini SIM card (2) is free of punched cutouts (4) so that the mini SIM card (2) can be inserted rectangular to one of the four edges in a slot of the mobile device without burrs on a cutout (4) being able to drive over the electric contacts of the mobile device.

13. Method according to claim 12, **characterized in that** the SIM card in plug-in format (1) is separated out of a data carrier.

14. Mobile device into which a SIM card according to one of the claims 1 to 11 is inserted.

## Revendications

1. Carte SIM au format plug-in (1) intégrant une mini carte SIM au format mini (2) ayant des contacts électriques (6) pour la connexion électrique avec les contacts électriques d'un dispositif mobile,
dans laquelle la mini carte SIM (2) est entourée de plusieurs découpes partielles perforées (4) et connectée en outre par quelques points de connexion avec le reste de la carte SIM plug-in (1), les découpes partielles (4) et les points de connexion étant agencés de telle façon que la mini carte SIM (2) soit détachable par pression du reste de la carte SIM plug-in (1) et des lignes gravées (5) étant prévues entre les découpes partielles (4),
**caractérisée en ce que**
la projection des contacts électriques (6) sur les quatre bords de la mini carte SIM (2) est vierge de découpes partielles perforées (4), en sorte que la mini carte SIM (2) puisse être insérée perpendiculairement à l'un des quatre bords dans un port du dispositif mobile, sans qu'à cette occasion des grilles puissent passer sur les contacts électriques du dispositif mobile au niveau d'une découpe partielle (4).

2. Carte SIM (1) selon la revendication 1, **caractérisée en ce que** les contacts électriques (6) de la mini carte SIM (2) sont orientés vers les lignes gravées (5).

3. Carte SIM (1) selon l'une des revendications 1 à 2, **caractérisée en ce que** les contacts électriques (6) de la mini carte SIM (2) sont orientés vers les lignes gravées (5) dans la direction d'insertion de la mini carte SIM (2) dans le dispositif mobile.

4. Carte SIM (1) selon l'une des revendications 1 à 3, **caractérisée en ce que** les lignes gravées (5) sont prévues sur des bords (3) latéralement opposés de la mini carte SIM (2).

5. Carte SIM (1) selon l'une des revendications 1 à 4, **caractérisée en ce que** des lignes gravées (5) sont prévues sur des bords (3) latéralement opposés de la mini carte SIM (2) et sont interrompues par des découpes partielles perforées (4).

6. Carte SIM (1) selon l'une des revendications 1 à 5, **caractérisée en ce qu'**une ligne gravée (5) est prévue à chacun des quatre bords (3),
et **en ce que** ces lignes gravées sont séparées l'une de l'autre par des découpes partielles perforées (4).

7. Carte SIM (1) selon la revendication 6, **caractérisée en ce qu'**une ligne gravée (5) n'est prévue que le long des sections droites des quatre bords (3).

8. Carte SIM (1) selon l'une des revendications 6 ou 7, **caractérisée en ce que** la ligne gravée (5) est ininterrompue à chacun des quatre bords (3).

9. Carte SIM (1) selon l'une des revendications 6 ou 7, **caractérisée en ce que** la ligne gravée (5), à chacun des quatre bords (3), consiste en plusieurs segments droits d'une section droite en face des contacts (6).

10. Carte SIM (1) selon l'une des revendications 1 à 9, **caractérisée en ce que** les lignes gravées (5) sont gravées sur un côté ou des deux côtés.

11. Carte SIM (1) selon l'une des revendications 1 à 10, **caractérisée en ce que** la mini carte SIM (2) possède un cinquième bord et que l'agencement des quatre bords (3) et du cinquième bord correspond à la norme GSM TS 102 221 v.9.1.0.

12. Procédé pour la fabrication d'une carte SIM au format plug-in (1) intégrant une carte SIM au format mini (2) ayant des contacts électriques (6) pour la connexion électrique avec les contacts électriques d'un dispositif mobile, comprenant les étapes de procédé suivantes :
- fabrication d'une carte SIM au format plug-in (1) intégrant une mini carte SIM (2) qui est entourée de plusieurs découpes partielles perforées (4) et connectée en outre par quelques points de connexion avec le reste de la carte SIM plug-in (1), les découpes partielles (4) et les points de connexion étant agencés de telle façon que la mini carte SIM (2) soit détachable par pression du reste de la carte SIM plug-in (1) et
gravure (5) du matériel entre les découpes partielles (4),
**caractérisée en ce que**
la projection des contacts électriques (6) sur les quatre bords de la mini carte SIM (2) est vierge de découpes partielles perforées (4), en sorte que la mini carte SIM (2) puisse être insérée perpendiculairement à l'un des quatre bords dans un port du dispositif mobile, sans qu'à cette occasion des grilles puissent passer sur les contacts électriques du dispositif mobile au niveau d'une découpe partielle (4).

13. Procédé selon la revendication 12, **caractérisé en ce que** la carte SIM au format plug-in (1) est détachée d'un support de données.

14. Dispositif mobile, dans lequel une carte SIM selon l'une des revendications 1 à 11 est insérée.
